Europäisches Patentamt

European Patent Office

Office européen des brevets

(11) Numéro de publication: **0 368 694**
**A1**

## DEMANDE DE BREVET EUROPEEN

(21) Numéro de dépôt: 89402751.5

(22) Date de dépôt: 05.10.89

(51) Int. Cl.5: **H01J 47/02, H01J 47/06, G01T 1/29**

(30) Priorité: 28.10.88 FR 8814185

(43) Date de publication de la demande:
16.05.90 Bulletin 90/20

(34) Etats contractants désignés:
**AT BE CH DE ES FR GB GR IT LI LU NL SE**

(71) Demandeur: **SCHLUMBERGER INDUSTRIES**
**50, avenue Jean Jaurès**
**F-92120 Montrouge(FR)**

(72) Inventeur: **Dorion, Irène**
**19, rue des Lombards**
**F-75004 Paris(FR)**
Inventeur: **Ruscev, Mario**
**6, Avenue de la République**
**F-92130 Issy-Les-Moulineaux(FR)**
Inventeur: **Maitrejean, Serge**
**6, rue Jean Dolent**
**F-75014 Paris(FR)**

(74) Mandataire: **Bentz, Jean-Paul**
**SCHLUMBERGER INDUSTRIES Propriété**
**Intellectuelle Groupe Electricité B.P. 620-02**
**F-92542 Montrouge Cédex(FR)**

(54) **Procédé et dispositif de localisation de particules neutres, à haute resolution.**

(57) L'invention concerne notamment un détecteur de particules neutres permettant une analyse unidimensionnelle d'un flux (14) de particules neutres lui parvenant en nappe.

Ce détecteur comprend un convertisseur plan solide (17) disposé à incidence rasante, un réseau de fils d'amplification de charges (18) utilisant une ionisation stimulée d'un gaz, et des pistes (19) de collectage de charges. Ces pistes sont disposées à proximité immédiate du convertisseur et sont soumises au même potentiel électrique que ce dernier.

Application à l'imagerie.

FIG.4

## PROCEDE ET DISPOSITIF DE LOCALISATION DE PARTICULES NEUTRES, A HAUTE RESOLUTION.

La présente invention concerne notamment un dispositif pour la détection et la localisation de particules dans un flux de particules neutres émises par une source et se propageant dans un angle solide d'ouverture limitée défini autour d'une direction moyenne, comprenant:

- un convertisseur solide sensiblement plan, destiné à être disposé à incidence rasante par rapport à cette direction moyenne, ce convertisseur étant propre, sous l'impact de ces particules neutres, à produire des charges électriques;

- des moyens d'amplification de charges, destinés à être portés à un potentiel électrique différent de celui du convertisseur, et à produire une amplification des charges par ionisation stimulée d'un gaz environnant;

- des moyens de collectage de charges, comprenant des conducteurs allongés, électriquement isolés les uns des autres, sensiblement parallèles les uns aux autres et au convertisseur, et dont chacun forme avec la direction moyenne dudit flux un plan sensiblement perpendiculaire au convertisseur; et,

- une enceinte perméable aux particules neutres, renfermant le convertisseur, les moyens d'amplification de charges, les moyens de collectage de charges, et le gaz.

Un dispositif de ce type est décrit dans la demande de brevet européen publiée sous le numéro 0 228 933.

Ce dispositif connu a permis l'obtention d'images de très haute qualité d'objets de dimensions et de densité importantes, irradiés par une source de particules neutres, telles que photons X, photons gamma, ou neutrons, ces objets étant disposés entre la source et le dispositif et explorés par balayage (scanning).

En particulier, ce dispositif connu a permis l'obtention d'images d'objets irradiés avec un contraste jusqu'alors inégalé.

L'intérêt exceptionnel manifesté par les spécialistes de l'imagerie pour ce dispositif antérieur a conduit à en rechercher une optimisation, dans le but de conférer à ce dispositif connu des qualités décisives par rapport aux autres systèmes connus, non seulement dans le domaine de l'imagerie d'objets très volumineux et denses, mais aussi dans celui de l'imagerie d'objets de dimensions plus faibles, application déjà ouverte au dispositif connu, mais pour laquelle ce dernier pouvait présenter des limitations plus sévères que des systèmes conventionnels du point de vue de la résolution.

C'est dans ce contexte et avec cette finalité qu'a été réalisée l'invention, avec le bénéfice supplémentaire que le perfectionnement apporté au dispositif connu est utilisable dans toutes les applications de ce dernier.

Le dispositif de l'invention, destiné à la détection et à la localisation de particules dans un flux de particules neutres émises par une source et se propageant dans un angle solide d'ouverture limitée défini autour d'une direction moyenne, et comprenant de façon connue:

- un convertisseur solide sensiblement plan, destiné à être disposé à incidence rasante par rapport à cette direction moyenne, ce convertisseur étant propre, sous l'impact de ces particules neutres, à produire des charges électriques;

- des moyens d'amplification de charges, destinés à être portés à un potentiel électrique différent de celui du convertisseur, et à produire une amplification des charges par ionisation stimulée d'un gaz environnant;

- des moyens de collectage de charges, comprenant des conducteurs allongés, électriquement isolés les uns des autres, sensiblement parallèles les uns aux autres et au convertisseur, et dont chacun forme avec la direction moyenne dudit flux un plan sensiblement perpendiculaire au convertisseur; et,

- une enceinte perméable aux particules neutres, renfermant le convertisseur, les moyens d'amplification de charges, les moyens de collectage de charges, et le gaz;

est essentiellement caractérisé en ce que lesdits moyens d'amplification de charges comportent des lignes électriquement conductrices, distinctes desdits conducteurs de collectage de charges, et en ce que les conducteurs de collectage de charges sont destinés à être reliés à un potentiel électrique voisin de celui du convertisseur.

Par "potentiel électrique voisin de celui du convertisseur", on entend ici un potentiel électrique éventuellement identique à celui du convertisseur, mais en tout cas plus proche de lui que du potentiel des moyens d'amplification de charges. Dans la mesure où les charges qui se sont amplifiées par ionisation stimulée sont négatives, les charges collectées sont positives, de sorte que les conducteurs de collectage de charges jouent le rôle de cathodes.

Alors que, dans le dispositif antérieur, les conducteurs allongés de collectage de charges servaient également à l'amplification des charges, des moyens d'amplification et de collectage de charges totalement séparés sont prévus dans le dispositif de l'invention.

Cette disposition particulière permet, en séparant les contraintes de conception qui pèsent sur les moyens d'amplification de charges d'une part et sur les moyens de collectage de charges de l'autre, d'éliminer des compromis qui limitaient la résolution du système connu.

Plus précisément, alors qu'il était nécessaire d'appliquer aux moyens d'amplification de charges un potentiel assez grand, par rapport au convertisseur, pour obtenir un phénomène d'ionisation stimulée, tel qu'une avalanche de Townsend, et de maintenir assez éloignées les unes des autres les lignes conductrices d'amplification de charges pour donner au champ électrique appliqué une distribution compatible avec l'utilisation du phénomène d'amplification, cette contrainte de distance minimale entre ces lignes avait pour conséquence directe une limitation de la résolution du système, puisque ces lignes servaient également au collectage des charges et que leur distance déterminaient la résolution du système.

En supprimant cette contrainte, et en permettant la réduction de la distance entre les conducteurs de collectage de charges, l'invention étend les possibilités de résolution du dispositif connu jusqu'aux limites de la technologie.

Selon un mode de réalisation particulier du dispositif de l'invention, les conducteurs de collectage de charges sont disposés à proximité immédiate d'une face au moins du convertisseur et séparés de cette dernière par une couche d'un matériau isolant.

Selon un autre mode de réalisation, le convertisseur est formé d'éléments coplanaires constituant lesdits conducteurs de collectage de charges.

De préférence, les lignes d'amplification de charges, qui sont disposées dans au moins un plan sensiblement parallèle à celui du convertisseur, ont chacune une direction sensiblement transversale par rapport à celle desdits conducteurs de collectage de charges.

L'expression "sensiblement transversale" est ici comprise comme synonyme de "non approximativement parallèle", autrement dit perpendiculaire ou oblique, avec un angle par exemple supérieur à 20 degrés.

Dans le cas où le dispositif est utilisé pour l'imagerie d'objets de faible volume, il est possible de rapprocher la source de particules neutres du dispositif, et il devient alors avantageux que les conducteurs de collectage de charges, tout en restant sensiblement parallèles les uns aux autres, soient orientés de manière que leurs directions convergent vers la source de particules neutres.

Cette disposition particulière des conducteurs de collectage de charges, dans laquelle ceux-ci ne sont plus strictement, mais seulement approximativement, parallèles les uns aux autres, permet de rapprocher la source et le dispositif tout en évitant les problèmes de parallaxe; ce rapprochement permet lui-même d'augmenter le nombre de particules atteignant le dispositif, donc d'obtenir un contraste encore meilleur des images produites; d'un autre côté, cette disposition permet, indépendamment du rapprochement de la source, la réalisation de détecteurs de grandes dimensions et néanmoins dépourvus d'effets de parallaxe; or cette disposition est, conformément à l'invention, rendue très aisée par le fait que, les conducteurs de collectage de charges étant indépendants des lignes d'amplification de charges, la disposition de ces conducteurs peut être choisie sans que se posent des problèmes de répartition du champ électrique responsable des avalanches.

Pour une réalisation industrielle du dispositif de l'invention, le matériau isolant comprend de préférence un polymère en feuille et les conducteurs de collectage de charges sont constitués par des pistes de cuivre gravées sur ce polymère en feuille.

L'invention concerne également un procédé pour détecter et localiser des particules dans un flux de particules neutres émises par une source et se propageant dans un angle solide d'ouverture limitée défini autour d'une direction moyenne, comprenant de façon connue les opérations consistant à:

- recevoir ces particules sur un convertisseur solide sensiblement plan disposé à incidence rasante par rapport à la direction moyenne du flux de particules, et produire ainsi des charges électriques à partir de ces particules neutres;
- amplifier ces charges par une ionisation stimulée d'un gaz environnant; et
- collecter les charges présentes dans au moins un plan sensiblement parallèle au convertisseur, en différents emplacements espacés les uns des autres suivant une direction sensiblement perpendiculaire à la direction moyenne du flux de particules; ce procédé étant essentiellement caractérisé en ce que l'opération de collectage de charges consiste à collecter des charges de polarité opposée à celle des charges qui sont amplifiées par ionisation.

Dans une forme du procédé particulièrement adaptée à l'imagerie, le collectage des charges est effectué le long de pistes de collectage de charges espacées les unes des autres suivant une direction sensiblement perpendiculaire à la direction moyenne du flux de particules, ces pistes pouvant avoir des directions convergeant vers la source de particules neutres.

L'opération d'amplification de charges comprend l'établissement, le long de plusieurs lignes d'un plan parallèle au convertisseur, d'au moins un potentiel électrique différent de celui du convertisseur, ces lignes ayant de préférence une direction sensiblement transversale par rapport à celle des pistes de collectage de charges.

Cette dernière disposition est particulièrement avantageuse en ce que, pour chaque particule ionisante issue du convertisseur, les charges créées par ionisation stimulée ont la possibilité de se répartir sur deux lignes voisines de potentiel électrique sans que les charges détectées, autrement dit les charges correspondantes mais de polarité opposée recueillies sur les pistes, aient à provenir de deux pistes différentes de collectage de charges: en effet, chaque piste, dans la mesure où elle est disposée transversalement aux lignes, correspond à plusieurs lignes. Cette disposition participe donc également à améliorer la résolution du dispositif.

D'autres caractéristiques et avantages de l'invention ressortiront clairement de la description qui en est faite ci-après, à titre indicatif et nullement limitatif, en référence aux dessins annexés, parmi lesquels:

- la figure 1 est une vue schématique représentant, de face, un système mettant en oeuvre le procédé de l'invention;

- la figure 2 est une vue du système de la figure 1, observé de côté suivant la flèche II de la figure 1;

- la figure 3 est une vue en perspective d'un dispositif de direction utilisable dans le système de la figure 1;

- la figure 4 est un schéma de principe illustrant le procédé de l'invention et le fonctionnement du dispositif de la figure 3 réalisé suivant un premier mode d'exécution;

- la figure 5 est une vue éclatée d'un sous-ensemble de détection du dispositif de la figure 3;

- la figure 6 est un schéma de principe analogue à celui de la figure 4, illustrant le fonctionnement du dispositif de la figure 3 tel que réalisé suivant un second mode d'exécution.

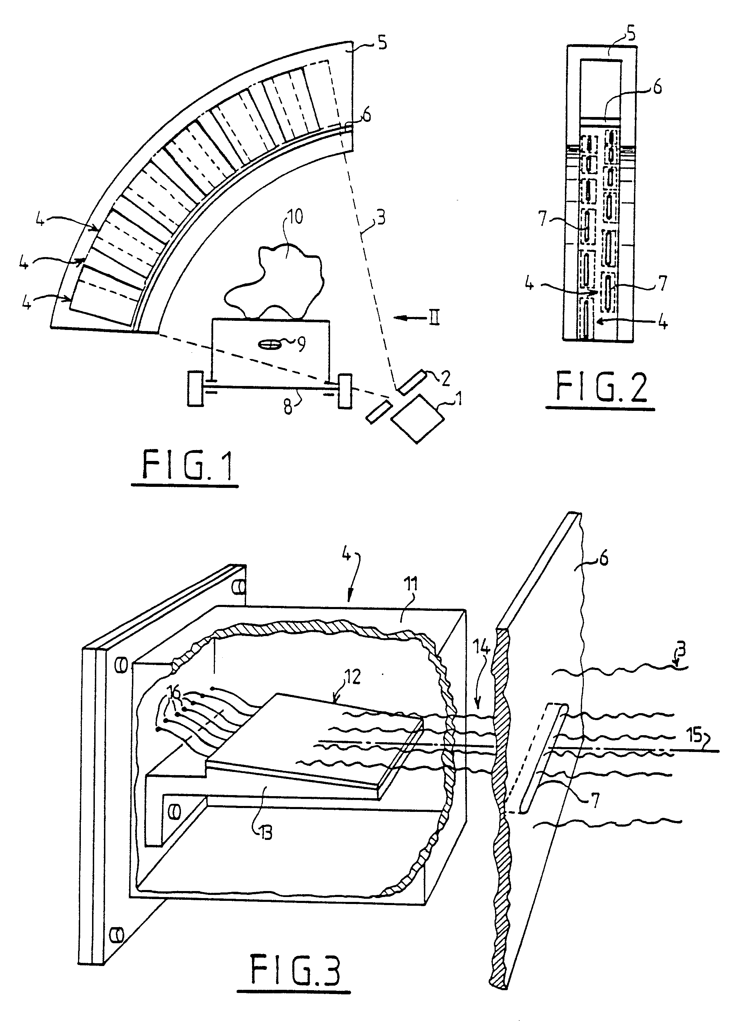

La figure 1 représente en 1 une source de particules neutres, par exemple une source de rayons X, de photons gamma ou de neutrons. Dans une application typique de l'invention, la source 1 est une source de rayons X dont l'énergie est comprise entre 250 keV et 750 keV.

Le flux de particules émis par cette source est restreint, grâce à un premier collimateur 2, à un faisceau excitateur 3 dirigé globalement vers un ensemble de détecteurs 4 portés par un bâti 5.

Une ou plusieurs plaque(s) 6 d'un matériau opaque aux particules neutres émises, du plomb par exemple dans le cas d'utilisation de rayons X, est disposée entre la source 1 et les détecteurs 4, à proximité immédiate de ces derniers, et est pourvue de fentes rectilignes 7 dont chacune constitue le collimateur propre d'un détecteur 4.

Dans le faisceau excitateur 3 sont prévus des moyens de translation, représentés par un chariot 8 susceptible de se déplacer suivant la direction indiquée par la flèche 9, en entrainant avec lui un objet à examiner 10 de façon que cet objet coupe le faisceau 3 au cours de sa translation.

Les fentes de collimation 7 sont perpendiculaires à la direction de translation indiquée par la flèche 9.

La figure 3 représente plus en détail l'un des détecteurs 4.

Ce détecteur, susceptible de constituer le dispositif particulier de l'invention, comprend, d'une façon déjà décrite dans la demande de brevet européen publiée précédemment mentionnée, une enceinte 11 perméable aux particules neutres, renfermant un gaz et un ensemble de détection 12 supporté par une potence 13.

Le gaz peut être composé de tout mélange gazeux autorisant l'apparition d'une amplification de charges par ionisation stimulée de ce gaz, par exemple l'apparition du phénomène "d'avalanche de Townsend" bien connu de l'homme de l'art; à cette fin, ce gaz peut être un mélange de 70 pourcent d'argon et de 30 pourcent d'éthane, ce dernier constituant la substance d'extinction (quencher). La pression de ce gaz est par exemple d'un bar environ.

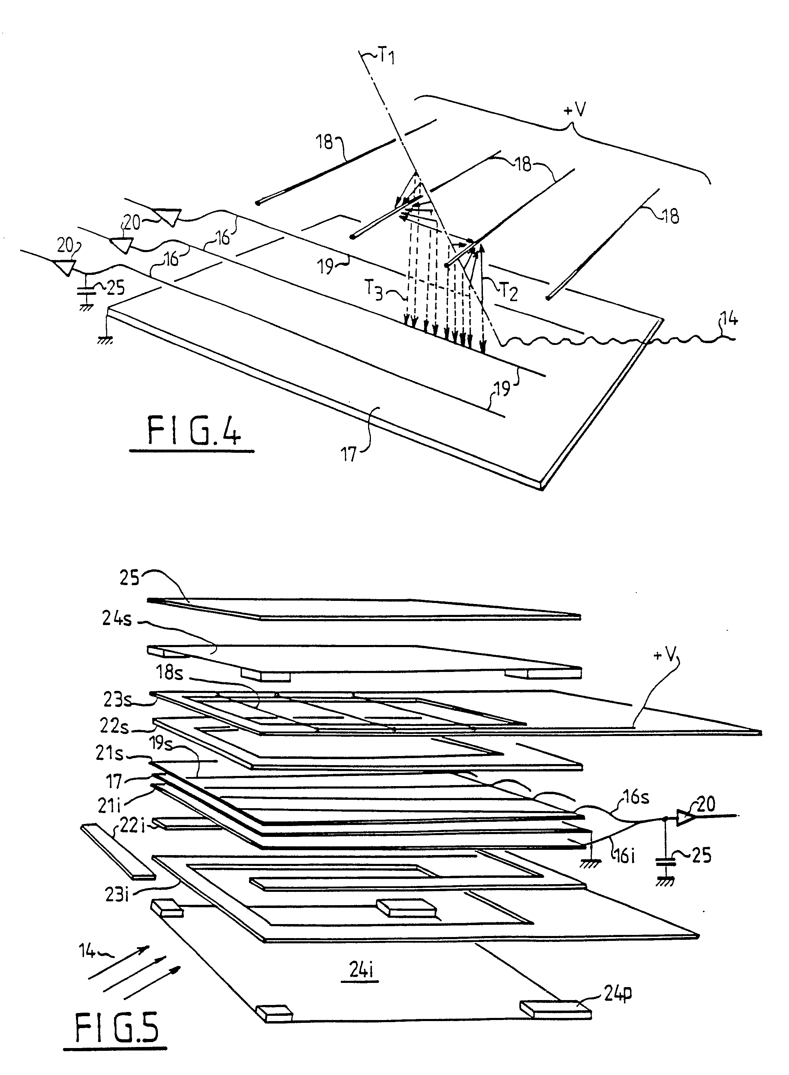

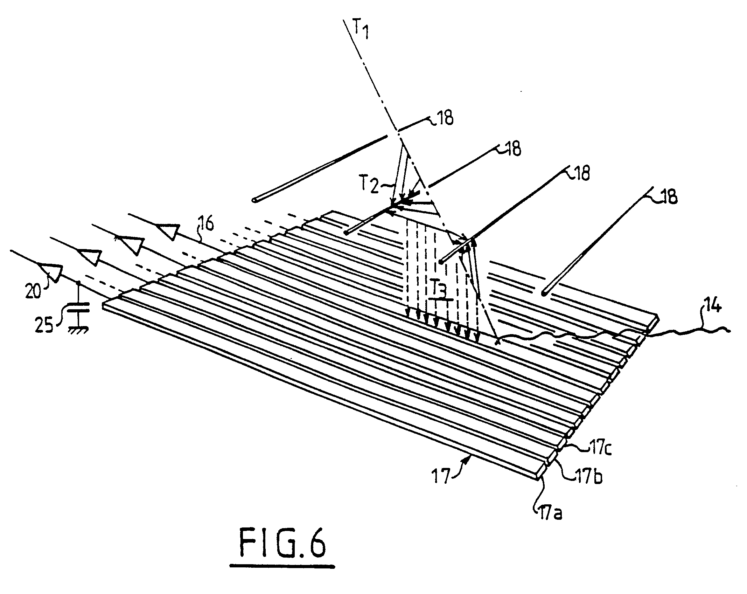

L'ensemble de détection 12, qui sera décrit plus en détail en référence aux figures 4 et 5, est de forme essentiellement plane; il est supporté par la potence 13 de manière à intercepter à incidence rasante le flux de particules neutres qui, ayant traversé l'objet 3 et la fente de collimation 7, se propage en une nappe plane 14.

L'ensemble de détection 12 et le flux en nappe 14 sont de préférence tous deux perpendiculaires au plan perpendiculaire à la fente rectiligne 7 du collimateur correspondant.

Comme le montre la figure 3, le flux en nappe 14 se propage dans un angle solide dont l'ouverture est délimitée par la fente de collimation 7, cet angle solide s'étendant autour d'une direction moyenne 15 qui correspond à la trajectoire d'un particule passant par le centre de la fente 7.

Le flux en nappe 14, qui a traversé transversalement une partie de l'objet 10, présente, perpendiculairement à sa direction de propagation, une distribution d'intensité de particules qui est représentative de la nature et de l'épaisseur de la matière traversée et que l'ensemble de détection 12 a pour fonction de détecter.

Comme le montre la figure 2, les détecteurs sont disposés en quinconce de manière que toute partie de l'objet 10 irradiée par le faisceau excitateur 3 soit observée à travers au moins un détecteur.

En plus des éléments déjà décrits, chaque détecteur 4 est doté d'une vanne (non représentée) pour l'admission du gaz, ainsi que de traversées étanches (non représentées), pour permettre l'adduction, vers l'ensemble de détection 12, d'un potentiel électrique externe +V, et pour rendre disponibles, à l'extérieur de l'enceinte, les signaux électriques qui sont produits par cet ensemble et qui sont représentatifs de la distribution d'intensité des particules dans le flux en nappe, donc de la nature et de l'épaisseur de la matière traversée, et transmis par les conducteurs 16.

La figure 4 représente plus en détail, bien que de façon schématique, un ensemble de détection 12.

Un tel ensemble comprend un convertisseur solide, des moyens de d'amplification de charges, et des moyens de collectage de charges.

Le convertisseur adopte la forme d'une plaque plane 17 disposée en incidence rasante par rapport au flux 14, l'angle d'incidence, non nul, étant par exemple inférieur à 10 degrés et de préférence de l'ordre d'un degré. Ce convertisseur est par exemple constitué, dans le cas d'utilisation de rayons X, d'une plaque de tantale d'une épaisseur de 50 à 200 microns.

La fonction de ce convertisseur est de produire, sous l'impact des particules neutres du flux 14 qu'il reçoit, des particules ionisantes à l'intérieur de l'enceinte. Le trajet d'une particule ionisante a été représenté de façon symbolique sur la figure 4 par un trait mixte T1.

Les moyens d'amplification de charges comprennent par exemple des lignes électriquement conductrices 18, préférablement réalisées sous la forme de fils très fins reliés à une source de potentiel externe qui les maintient au potentiel positif + V, ce dernier étant par exemple de l'ordre de 3000 volts.

A titre d'exemple, les fils 18 sont réalisés en acier inoxydable ou en tungstène doré; ils ont un diamètre de 50 microns et sont disposés, au moins à peu près parallèlement les uns aux autres, à environ 2.5 millimètres les uns des autres, dans un plan au moins à peu près parallèle au convertisseur, et à une distance d'environ 2 millimètres de ce dernier. Leur direction générale est en outre transversale par rapport à la direction moyenne 15 de propagation des particules neutres.

Les particules ionisantes telles que celle qui se propage suivant T1 provoquent la création, à partir des molécules du gaz contenu dans l'enceinte 11, de charges électriques, et plus précisément d'électrons chargés négativement et d'ions positifs.

Les électrons, violemment attirés par les lignes électriques reliées au potentiel électrique positif + V, provoquent à leur tour, par exemple par avalanche, l'apparition de charges électriques, dont toutes les charges négatives sont attirées par les lignes 18. Ce phénomène d'attraction des charges négatives par ces lignes est symboliquement représenté, sur la figure 4, par des flèches en traits pleins telles que T2.

En plus du convertisseur et des moyens d'amplification de charges précédemment décrits, chaque ensemble de détection 12 comprend, selon l'invention, des moyens de collectage de charges.

Bien que l'expression "moyens de collectage de charges" puisse a priori s'appliquer aux lignes 18, qui collectent des charges négatives, l'expression est ici utilisée pour désigner des éléments distincts de ces lignes.

En particulier, les moyens de collectage de charges comprennent des pistes 19 reliées aux conducteurs 16 déjà mentionnés, ou constituées par ces derniers.

Les pistes 19 sont formées de conducteurs électriques reliés à un potentiel électrique proche du potentiel du convertisseur, autrement dit à un potentiel négatif par rapport au potentiel + V des lignes 18. Bien que portées au même potentiel ou à des potentiels voisins, les pistes 19 sont électriquement isolées les unes des autres, ainsi que du convertisseur. Bien que le convertisseur puisse être électriquement isolé pour adopter un potentiel électrique flottant, il est de préférence relié au potentiel de la terre, les pistes 19 étant également reliées au potentiel de la terre mais par l'intermédiaire de capacités telles que 25.

Dans ces conditions, ces pistes, bien que ne jouant pas intégralement le même rôle que les lignes 18. seules responsables de l'amplification des charges, jouent un rôle symétrique de celui de ces dernières pour ce qui est du collectage des charges et plus précisément le rôle de cathodes; en effet, les ions positifs créés par les phénomènes d'avalanche, attirés par le potentiel négatif par rapport à eux des pistes 19, sont collectés par ces dernières: ce phénomène est symboliquement représenté, sur la figure 4, par des flèches en pointillés telles que T3.

Les pistes 19 sont par exemple disposées au moins à peu près parallèlement les unes aux autres, et dans un plan au moins à peu près parallèle au convertisseur. Dans le mode de réalisation représenté aux figures 4 et 5, ces pistes sont disposées à proximité immédiate de chaque face du convertisseur, à une distance de celle-ci d'environ 15 microns par exemple. Leur direction générale est parallèle à la projection sur le convertisseur 17 de la direction moyenne de propagation 15 des particules neutres; ces pistes sont enfin espacées les unes des autres, dans une direction sensiblement perpendiculaire à cette projection, d'une distance susceptible d'être sensiblement inférieure à la distance entre deux lignes voisines 18, et même par exemple inférieure à un millimètre.

Chaque piste 19 est, par l'intermédiaire d'un conducteur 16 qui traverse l'enceinte 11, reliée à un dispositif électronique 20, symbolisé par un amplificateur, propre à amplifier encore et mesurer la charge totale reçue par la piste à laquelle il est relié.

Chaque piste 19 peut être reliée individuellement à un dispositif électronique 20 propre à cette piste ou les pistes 19 peuvent, par un multiplexage connu en soi, être reliées tour à tour à un dispositif électronique 20 unique qui mesure alors séquentiellement les charges reçues sur les différentes pistes.

Les dispositifs électroniques tels que 20 sont bien connus de l'homme de l'art et leur description est ici superflue. Leur fonction consiste à permettre la représentation visuelle sur un écran, et de préférence le stockage dans une mémoire électronique sous une forme adaptée, de l'ensemble des signaux électriques correspondant aux charges reçues par les différentes pistes 19, ces charges étant elles-mêmes représentatives de la nature et de l'épaisseur de la matière traversée par les particules neutres qui ont atteint le convertisseur 17, en différents emplacements de ce dernier suivant la direction des lignes 18.

Au lieu d'orienter les pistes 19 de façon qu'elles soient rigoureusement parallèles les unes aux autres, il est à la fois possible et avantageux, selon l'invention, d'orienter chacune de ces pistes 19 de façon qu'elle pointe vers la source 1. Bien que dans la pratique, une telle disposition conduise à n'écarter deux pistes voisines de leur parallélisme rigoureux que d'un angle très faible, par exemple un dixième de degré, elle permet, sans apparition d'erreurs de parallaxe, de rapprocher le détecteur 4 et la source 1, et de recevoir sur le détecteur, pour une même source 1, une plus grande quantité de particules neutres que dans le cas où la distance entre le détecteur et la source est plus grande.

L'ensemble de détection 12 peut être réalisé conformément à l'enseignement de la figure 5.

Cet ensemble de détection 12 est formé d'un empilement qui, à quelques détails près, est symétrique par rapport à sa couche médiane, laquelle est constituée par le convertisseur 17. Les éléments fonctionnellement équivalents, respectivement situés au-dessus et au-dessous du convertisseur dans la disposition de la figure 5 seront repérés par les mêmes chiffres de référence, respectivement suivis des lettres "s" (supérieur) et "i" (inférieur).

Sur chacune des faces du convertisseur 17 est collée à chaud et sous presse, au moyen d'une colle polymérisable adéquate, une feuille 21s, 21i d'un matériau isolant, par exemple une feuille du matériau vendu sous la marque Kapton, d'une épaisseur de 12 microns, la face externe de cette feuille étant initialement recouverte, de façon connue, d'une couche de cuivre d'une épaisseur de 5 microns.

Après collage de cette feuille, la couche de cuivre est gravée, par photolithogravure, de manière à ne plus laisser subsister que des pistes rectilignes constituant les pistes 19. Par souci de clarté, les pistes représentées sur la figure 5 sont en faible nombre (4) et fortement convergentes, alors qu'elles sont de préférence en nombre important (256 par exemple) et que leur convergence, qui dépend de la distance du détecteur à la source, est en pratique beaucoup moins accusée.

Les conducteurs en vis-à-vis tels que 16s et 16i sont reliés ensemble à un même dispositif électronique 20.

Au dessus de chaque plan des pistes 19 est disposé un cadre intercalaire tel que 22s, 22i. Chacun de ces cadres, de forme rectangulaire comme le convertisseur 17, assure une double fonction: d'une part, il assure un maintien correct du convertisseur, permettant à ce dernier de conserver la plus grande planéité possible, et d'autre part, il détermine l'espacement, dans le sens vertical sur la figure 5, entre le plan des pistes 19 et les couches ultérieures de l'élément de détection.

Chaque cadre 22s, 22i a une épaisseur d'environ 1.5 millimètres par exemple, et peut être réalisé soit en résine époxy chargée de fibre de verre, soit en acier inoxydable.

Dans ce dernier cas cependant, les pistes 19 et les cadres 22s et 22i sont séparés par un isolant afin d'éviter le court-circuit des différentes pistes à travers ces cadres; en outre, le bord avant du cadre inférieur 22i est constitué d'un matériau très transparent aux particules neutres, de façon à ne pas créer une ombre portée sur le convertisseur.

Au-dessus chaque cadre 22s, 22i est disposé un support plan 23s, 23i adoptant également la forme d'un cadre rectangulaire, et réalisé par exemple en résine époxy chargée de fibres de verre. Sur la face de chacun de ces supports qui est opposée au cadre 22s, 22i sont tendus des fils 18, qui sont électriquement reliés entre eux et à la source de potentiel +V à l'extérieur de l'enceinte 11.

Au-dessus de chaque support 23s, 23i est disposée une cathode plane supplémentaire, 24s, 24i électriquement isolée des fils 18 par exemple au moyen de patins isolants adéquats tels que 24p, et portée sensiblement au même potentiel que le convertisseur 17; bien que facultative, cette cathode supplémentaire, qui permet de symétriser le champ électrique autour des fils 18, contribue à améliorer les performances du dispositif.

Au-dessus de la cathode supplémentaire supérieure 24s peut être disposée une plaque isolante 25, permettant d'isoler cette cathode 24s de la potence 13 dont elle est rendue solidaire; dans la mesure où les potentiels de cette cathode et de cette potence peuvent être choisis égaux entre eux et au potentiel de terre par exemple, le plaque 25 est optionnelle.

L'empilage constitué par les différentes couches représentées sur la figure 5 est par exemple rendu solidaire de la potence 13 au moyen de vis en Nylon, de manière à éviter toute transmission de potentiel électrique d'une couche à l'autre.

Bien que le mode de réalisation décrit en référence à la figure 5 fasse mention d'un montage symétrique, l'homme de l'art comprendra qu'un détecteur conforme à ce mode de réalisation pourrait être construit en omettant les éléments qui, sur la figure 5, apparaissent soit au-dessous du convertisseur 17, soit au-dessus.

La figure 6 représente, schématiquement, un autre mode de réalisation de l'invention, dans lequel le convertisseur 17 est constitué, par exemple grâce à un découpage d'une plaque de tantale, d'éléments coplanaires tels que 17a, 17b, 17c qui remplissent ensemble, en plus de la fonction de convertisseur, la fonction des pistes de collectage 19 décrites en référence à la figure 4.

Ces éléments coplanaires, tels que 17a, 17B, 17c adoptent donc la même disposition que celle décrite pour les pistes 19 des figures 4 et 5, sont électriquement isolés entre eux, sont individuellement reliés au potentiel de terre par des capacités telles que 25 et sont individuellement, ou tour à tour par multiplexage, reliés à au moins un circuit électronique tel que 20.

Selon une autre variante de réalisation de l'invention, l'une au moins des cathodes supplémentaires telles que 24s peut être constituée par un plan de pistes de collectage de charge 19, en remplacement ou en complément des pistes de collectage disposées à proximité immédiate du convertisseur ou constituées par lui.

## Revendications

1. Dispositif pour la détection et la localisation de particules dans un flux de particules neutres émises par une source et se propageant dans un angle solide d'ouverture limitée défini autour d'une direction moyenne (15), comprenant:
- un convertisseur solide sensiblement plan (17), destiné à être disposé à incidence rasante par rapport à cette direction moyenne, ce convertisseur étant propre, sous l'impact de ces particules neutres, à produire des charges électriques;
- des moyens d'amplification de charges, destinés à être portés à un potentiel électrique différent de celui du convertisseur, et à produire une amplification des charges par ionisation stimulée d'un gaz environnant;
- des moyens de collectage de charges, comprenant des conducteurs allongés (19), électriquement isolés les uns des autres, sensiblement parallèles les uns aux autres et au convertisseur, et dont chacun forme avec la direction moyenne dudit flux un plan sensiblement perpendiculaire au convertisseur; et,
- une enceinte (11) perméable aux particules neutres, renfermant le convertisseur, les moyens d'amplification de charges, les moyens de collectage de charges, et le gaz;
caractérisé en ce que lesdits moyens d'amplification de charges comportent des lignes électriquement conductrices (18), distinctes desdits conducteurs de collectage de charges, et en ce que les conducteurs de collectage de charges (19) sont destinés à être reliés à un potentiel électrique voisin de celui du convertisseur.

2. Dispositif suivant la revendication 1, caractérisé en ce que les conducteurs de collectage de charges sont disposés à proximité immédiate d'une face au moins du convertisseur et séparés de cette dernière par une couche (21) d'un matériau isolant.

3. Dispositif suivant la revendication 1, caractérisé en ce que ledit convertisseur est formé d'éléments coplanaires constituant lesdits conducteurs de collectage de charges.

4. Dispositif suivant l'une quelconque des revendications précédentes, caractérisé en ce que lesdites lignes d'amplification de charges sont disposées dans au moins un plan sensiblement parallèle à celui du convertisseur, et ont chacune une direction sensiblement transversale par rapport à celle desdits conducteurs de collectage de charges.

5. Dispositif suivant l'une quelconque des revendications précédentes, caractérisé en ce que les directions desdits conducteurs de collectage de charges convergent vers la source de particules neutres (1).

6. Dispositif suivant l'une quelconque des revendications précédentes combinée à la revendication 2, caractérisé en ce que le matériau isolant comprend un polymère en feuille et en ce que lesdits conducteurs de collectage de charges sont constitués par des pistes de cuivre gravées sur ce polymère en feuille.

7. Procédé pour détecter et localiser des particules dans un flux de particules neutres émises par une source et se propageant dans un angle solide d'ouverture limitée défini autour d'une direction moyenne, comprenant les opérations consistant à:
- recevoir ces particules sur un convertisseur solide (17) sensiblement plan disposé à incidence rasante par rapport à la direction moyenne du flux de particules, et produire ainsi des charges électriques à partir de ces particules neutres;
- amplifier ces charges par ionisation stimulée d'un gaz environnant; et
- collecter les charges présentes dans au moins un plan sensiblement parallèle au convertisseur, en différents emplacements espacés les uns des autres suivant une direction sensiblement perpendiculaire à la direction moyenne (15) du flux de particules;
caractérisé en ce que l'opération de collectage de charges consiste à collecter des charges de polarité opposée à celle des charges qui sont amplifiées par ionisation.

8. Procédé suivant la revendication 7, caractérisé en ce que le collectage des charges est effectué le long de pistes de collectage de charges (19) espacées les unes des autres suivant une direction sensiblement perpendiculaire à la direction moyenne du flux de particules.

9. Procédé suivant l'une quelconque des revendications 7 et 8, caractérisé en ce que le collectage des charges est effectué le long de pistes de collectage de charges dont les directions convergent vers la source de particules neutres (1).

10. Procédé suivant l'une quelconque des revendications 7 à 9, caractérisé en ce que l'opération d'amplification de charges comprend l'établissement, le long de plusieurs lignes d'un plan parallèle au convertisseur, d'au moins un potentiel électrique (+V) différent de celui du convertisseur.

11. Procédé suivant la revendication 10, caractérisé en ce que lesdites lignes (18) à potentiel électrique établi ont une direction sensiblement transversale par rapport à celle desdites pistes de collectage de charges (19).

FIG.1

FIG.2

FIG.3

FIG.4

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 000 271 (NATIONAL RESEARCH DEVELOPMENT) * Figures 1,2; page 6, ligne 22 - page 9, ligne 17 * | 1,7 | H 01 J 47/02 H 01 J 47/06 G 01 T 1/29 |
| A | | 3,4,6-8 ,10,11 | |
| D,Y | EP-A-0 228 933 (ENERTEC) * Figures 1,2; revendication 1 * | 1,7 | |
| A | NUCLEAR INSTRUMENTS AND METHODS, vol. 156, no. 1, octobre 1978, pages 27-31, Amsterdam, NL; J.E. BATEMAN et al.: "A hybrid MWPC gamma ray detecting system for applications in nuclear medicine" * Paragraphe 2; pages 27-28 * | 1,7 | |

DOMAINES TECHNIQUES RECHERCHES (Int. Cl.5)

G 01 J 47/00
G 01 T 1/29

Le présent rapport a été établi pour toutes les revendications

| Lieu de la recherche | Date d'achèvement de la recherche | Examinateur |
|---|---|---|
| LA HAYE | 08-02-1990 | SCHAUB G.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................................
& : membre de la même famille, document correspondant